# EUROPÄISCHE PATENTSCHRIFT

(11) **EP 3 326 285 B1**
(45) Veröffentlichungstag und Bekanntmachung des Hinweises auf die Patenterteilung: **22.04.2020**
(21) Anmeldenummer: 16722125.8
(22) Anmeldetag: 04.05.2016
(51) Int. Cl.: H02P 27/06

(54) **VORRICHTUNG ZUR VERMEIDUNG VON SCHÄDLICHEN LAGERSTRÖMEN**
APPARATUS FOR AVOIDING HARMFUL BEARING CURRENTS
DISPOSITIF POUR ÉVITER LES COURANTS DE PALIER DOMMAGEABLES

(30) Priorität: 24.07.2015 DE 102015112146
(43) Veröffentlichungstag der Anmeldung: 30.05.2018
(73) Patentinhaber: ebm-papst Mulfingen GmbH & Co. KG, 74673 Mulfingen (DE)
(72) Erfinder: SCHROTH, Sebastian, 74635 Kupferzell (DE); OBERST, Roland, 97947 Grünsfeld (DE); PILS, Malte, 74532 Ilshofen-Oberaspach (DE); WECKERT, Marco, 74677 Dörzbach-Hohebach (DE)
(74) Vertreter: Staeger & Sperling Partnerschaftsgesellschaft mbB
(86) Internationale Anmeldenummer: PCT/EP2016/059990
(87) Internationale Veröffentlichungsnummer: WO 2017/016692

(56) Entgegenhaltungen:
- EP-A1- 1 445 850
- DE-A1-102006 007 437
- DE-B3-102004 016 738
- US-A1- 2008 088 187
- US-A1- 2011 234 026
- SCHROTH SEBASTIAN ET AL: "Impact of stator grounding in low power single-phase EC-motors", 2014 IEEE APPLIED POWER ELECTRONICS CONFERENCE AND EXPOSITION - APEC 2014, IEEE, 16. März 2014 (2014-03-16), Seiten 783-790, XP032591158, DOI: 10.1109/APEC.2014.6803397 [gefunden am 2014-04-21]

## Beschreibung

Die vorliegende Erfindung betrifft eine Vorrichtung zur Reduzierung und insbesondere zur Vermeidung von schädlichen Lagerströmen in einer elektrischen Maschine, wie einem EC-Motor sowie eine elektrische Maschine, die mit einer solchen Vorrichtung ausgestattet ist.

Drehzahlveränderbare Motoren werden heute überwiegend von Spannungszwischenkreisumrichtern gespeist. Die Speisung durch den Spannungszwischenkreisumrichter führt jedoch zu Lagerströmen in den Lagern des Motors.

Ein solcher Stromfluss durch die Lager kann bei elektrischen Maschinen mit Wälz- und Gleitlagern zu Schäden bis hin zum totalen Ausfall führen. Im Netzbetrieb können sogenannte Wellenspannungen auftreten, welche in einer Leiterschleife induziert werden, die aus der Welle, den beiden Lagern, den Lagerschilden sowie dem Gehäuse besteht.

Die Hintergründe und physikalischen Ursachen von Wellenspannungen sind umfangreich in der Literatur beschrieben. Vereinfacht ausgedrückt, treten aufgrund von Asymmetrien des magnetischen Kreises, die sich nicht zu "Null" addieren magnetische Flüsse innerhalb der elektrischen Maschine auf, die den besagten magnetischen Ringfluss verursachen.

Zur Erzeugung der benötigten Stromform wird eine Wechselrichterschaltung (Inverter) eingesetzt, die mittels PWM im Mittel eine Spannung an die Klemmen des EC-Motors anlegt, so dass sich die gewünschte Stromform einstellt. Der Inverter arbeitet dabei typischerweise mit einer Schaltfrequenz außerhalb des hörbaren Bereichs (>16kHz).

Bei Speisung der elektrischen Maschine aus einem Pulswechselrichter entsteht eine zweite Art der elektrischen Lagerbeanspruchung, nämlich eine kapazitiv eingekoppelte Lagerspannung. Durch das geschaltete Pulsmuster des Inverters ergibt sich an dessen Ausgang eine mit der Schaltfrequenz des Inverters springende Gleichtaktspannung (common mode voltage) gegenüber Erde. Diese Gleichtaktspannung wird über kapazitive Koppelnetzwerke auch auf das Lager übertragen. Die physikalische Ursache dieser Art der Lagerspannung sind die Spannungsänderungen am Wechselrichterausgang, die durch die schnellen Schaltvorgänge erzeugt werden sowie das Steuerverfahren des Pulswechselrichters, das im direkten Zusammenhang mit der Gleichtaktspannung (common mode voltage) steht.

Hierdurch bildet sich eine Spannung zwischen dem Lagerinnen- und Lageraußenring und der auf einem isolierenden Ölfilm laufenden Kugel des Lagers aus, wobei der Ölfilm zwischen Lagerinnen- und Lageraußenring elektrisch als Kapazität betrachtet werden kann. Kommt es nun aufgrund unzureichender Isolationsstärke des Ölfilms, bzw. zu hohen Lagerspannungen zu einem Durchschlag der Isolation, so entlädt sich die Ölfilmkapazität und es findet ein Ausgleich der Ladungsträger zwischen Lagerinnen- und Lageraußenring statt (electric discharge machining).

Solche Lagerströme können je nach Ausführung des Motors zu einem vorzeitigen Ausfall der Lager führen, welcher zu einer Riffelbildung an den Laufflächen des Lagers und zu einer Zersetzung des Lagerfetts führt.

Als Abhilfe wurden in der Vergangenheit hierzu stromisolierte Lager, z. B. Lager mit einer Keramikisolierung am Außenring oder Hybridlager mit Keramik-Walzkörpern, verwendet. Da diese Lager jedoch sehr teuer sind, eignet sich eine solche Lösung nicht in idealer Weise für die Massenfertigung.

Aus dem Stand der Technik sind weitere Abhilfemaßnahmen bekannt. So lehren die Druckschriften EP 1 445 850 A1 bzw. DE 10 2004 016 738 B3 eine Vorrichtung zum Schutz eines Lagers einer Elektromaschine zu verwenden, die eine Kompensationsschaltung bzw. eine Kompensationseinrichtung zur Erzeugung eines Kompensationsstroms für die Kompensation eines Störstroms durch die Lager vorsieht.

Eine alternative Lösung wird durch einen gezielten Kurzschluss zwischen den Lagerringen erzielt. Die US 20080088187A1 lehrt z. B. eine leitende Verbindung zwischen Rotor und Stator vorzusehen und einen Kurzschluss zwischen Rotor und Stator über eine Feder zu realisieren. Hierzu sind noch Alternativen bekannt, bei denen ein Bypass-Element (z.B. Bypass-Kondensator) zwischen den Lagern eingesetzt wird.

Nachteilig ist dabei unter anderem, dass der Stator und Rotor leitfähig miteinander verbunden sind. Somit muss die erforderliche Isolation zwischen den Wicklungen und dem Stator entsprechend verstärkt werden. Am Schleifkontakt treten ferner Verschleißerscheinungen auf und ein zusätzliches Bypass-Element verursacht auch zusätzliche Kosten.

Eine weitere bekannte Maßnahme besteht in dem Isolieren der Welle und dem Umspritzen des Stators. Durch die zusätzliche Isolationsschicht zwischen der Welle und dem Stator wird ein Teil der Lagerspannung über der Isolation abgebaut. Nachteilig ist hierbei, dass die auftretenden Lagerspannungen dennoch ausreichend hoch sein können, dass es zu unerwünschten Lagerströmen kommt.

Eine Lösung, wie die der Impedanzanpassung des Lagerschildes, wie z. B. aus der US 2011/0234026 A1 bekannt, eignet sich nur für Ausführungen bei denen überhaupt leitfähige Lagerschilde vorgesehen sind.

Aus der Publikation von S. Schroth, D. Bortis, J. W. Kolar "Impact of Stator Grounding in Low Power Single-Phase ECMotors, Proceedings of the 29th Applied Power Electronics Conference and Exposition (APEC 2014), Texas, Houston, USA, March 16-20, 2014*"* ist eine Lösung bekannt, bei der der Stator isoliert aufgebaut ist und eine kapazitiven Anbindung des Stators an das Erdpotential erfolgt. Problematisch ist dabei, dass die Anbindung des Stators an das Erdpotential einen Einfluss auf die Filtereigenschaften des EMV-Filters hat und zu einer deutlichen Verschlechterung der EMV-Eigenschaften führt, da gleichzeitig die Impedanz gegen die Erde verringert wird. Dies hat ein deutlich erhöhtes Filtervolumen zu Folge. Das bedeutet, dass jeweils eine Adaption individuell an den Motor erfolgen muss, so dass eine solche Lösung ebenfalls nicht universell einsetzbar ist.

Der Erfindung liegt deshalb die Aufgabe zugrunde, eine Lösung bereit zu stellen, mit der die unerwünschten Lagerströme wirksam reduziert oder ganz verhindert werden können, bei der vorgenannte Nachteile nicht auftreten und die universell einsetzbar ist.

Diese Aufgabe wird mittels einer Vorrichtung zur Vermeidung von schädlichen Lagerströmen in einer elektrischen Maschine mit den Merkmalen von Anspruch 1, sowie mit einem Motor mit den Merkmalen von Anspruch 10 gelöst.

Der Grundgedanke der Erfindung ist darin zu sehen, dass der Schutz des Lagers vor unerwünschten Lagerströmen durch Verbinden des Stators an ein hochfrequentes und gegenüber dem Erdpotential stabiles Potential vorzugsweise das Elektronikpotential erfolgt, wobei die Verbindung entweder direkt als Kurzschlussverbindung oder alternativ über eine Kapazität oder eine Impedanz erfolgt, wodurch gleichzeitig die für den Berührschutz erforderliche Isolationsstrecke durch die eingebrachte Impedanz sichergestellt wird.

Das elektrische Verbinden des Stators an ein stabiles Elektronikpotential über eine beliebige Impedanz, kann demnach ohmsch, induktiv, kapazitiv oder unter Einbindung ganzer Netz-Topologien realisiert werden.

Um einen drehzahlvariablen Betrieb eines Motors zu ermöglichen, werden die Motoren über Umrichter mit entsprechend hoher Taktfrequenz gespeist. Ein typischer Stromrichter mit Gleichspannungszwischenkreis (auch U-Umrichter genannt) besteht regelmäßig aus einem Gleichrichter, dem Zwischenkreis mit konstanter Spannung und einem Wechselrichter, wobei aus der konstanten Zwischenkreisspannung ein dreiphasiges Spannungssystem erzeugt wird. Die Zwischenkreisspannung hat über den Gleichrichter und/oder den EMV-Filter einen Bezug zum Erdpotential. Infolge der Pulsung tritt zwischen dem Erdpotential und den Motorsträngen eine Spannung auf, die der halben Zwischenkreisspannung (± U_{ZK}/2) entspricht. Diese Spannung tritt in allen drei Strängen als gleichphasige Gleichtaktspannung (common mode voltage) auf.

Das zuvor genannte stabile Potential der Elektronik, mit dem der Stator elektrisch verbunden wird, ist erfindungsgemäß ein vom Erdungspotential unterschiedliches Potential eines vorzugsweise gefilterten U-Umrichters sein. So kann die Verbindung entweder mit dem Zwischenkreispotential DC+ des Zwischenkreises oder dem Massepotential der Elektronik bzw. DC-, dem Potential vor oder nach dem Gleichrichter der Gleichrichterschaltung, dem Potential innerhalb des EMV-Filters oder alternativ auch das Ausgangspotential der Niederspannungsversorgung bzw. des Schaltnetzteiles sein.

Erfindungsgemäß wird demnach eine Vorrichtung zur Reduzierung und/ oder zur Vermeidung von schädlichen Lagerströmen in einer elektrischen Maschine vorgeschlagen, wie z. B. einem dreiphasigen EC-Motor, mit einem Rotor und mit einem isoliert aufgebauten Stator, wobei zwischen Rotor und Stator ein Lageraussenring und ein Lagerinnenring vorgesehen sind, ferner umfassend eine Anschlusselektronik zum Anschluss des Motors, wobei der Stator durch eine elektrische Verbindung mit einem hochfrequent gegenüber dem Erdpotential verschiedenen sowie gegenüber diesem stabilen Elektronikpotential an einem Potentialabgriff der Anschlusselektronik verbunden ist.

In einer bevorzugten Ausführungsform der Erfindung ist vorgesehen, dass die elektrische Verbindung zwischen dem Stator und dem Elektronikpotential über eine zwischengeschaltete Kapazität oder über eine beliebige zwischengeschaltete Impedanz ausgebildet ist.

Alternativ kann vorgesehen sein, dass die elektrische Verbindung zwischen dem Stator und dem Elektronikpotential als elektrische Kurzschlussverbindung ausgebildet ist. Somit liegt der Stator während dem Betrieb des Motors unmittelbar auf dem Elektronikpotential.

In einer weiteren vorteilhaften Ausbildung der erfindungsgemäßen Vorrichtung ist vorgesehen, dass die Anschlusselektronik wenigstens einen Gleichrichter, einen Zwischenkreis und einen Wechselrichter umfasst und der Potentialabgriff zur Verbindung des Stators in der Anschlusselektronik so vorgesehen bzw. angeordnet ist, dass das am Stator verbundene Elektronikpotential eines der im Folgenden genannten Potentiale entspricht:
- dem Potential des Zwischenkreises, vorzugsweise dem positive Zwischenkreispotential (DC+)
- dem Massepotential des Zwischenkreises (15),
- dem Potential am Mittelabgriff (15') des Zwischenkreises (15) oder
- dem negativen Zwischenkreispotential (DC-).

Alternativ kann der Potentialabgriff zum Verbinden des Stators mit dem Elektronikpotential auch ein Abgriff unmittelbar vor oder unmittelbar nach dem Gleichrichter sein. In diesem Fall kann in einer Weiterentwicklung der Erfindung vorgesehen werden, dass ein im Frequenzbereich der Lagerspannung Impedanz reduzierendes Netzwerk parallel zu einer, mehreren oder allen Dioden des Gleichrichters geschaltet wird.

In einer weiteren alternativen Ausgestaltung der Erfindung weist die Anschlusselektronik eingangsseitig ferner einen EMV-Filter auf und ist der Potentialabgriff für den Stator ein Abgriff innerhalb des EMV-Filters.

Weiter alternativ kann vorgesehen sein, dass, sofern die Anschlusselektronik an einer Niederspannungsversorgung oder einem Schaltnetzteil angeschlossen ist, der Potentialabgriff für den Stator als ein Abgriff an den Ausgängen der Niederspannungsversorgung oder des Schaltnetzteils vorgesehen ist.

Ein weiterer Aspekt der vorliegenden Erfindung betrifft einen Elektromotor, vorzugsweise einen EC-Motor, der mit einer wie zuvor beschriebenen Vorrichtung ausgebildet ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Darstellung des Gesamtsystems bei einer Anbindung des Stators an das Elektronikpotential,
- Fig. 2: eine Modellierung des Kapazitätsnetzwerkes,
- Fig. 3: ein Ersatzschaltbild der parasitären Lagerkapazitäten und dem Hauptstrompfad des Lagerstromes,
- Fig. 4: ein Ersatzschaltbild der parasitären Lagerkapazitäten bei der Anbindung des Stators mit dem zufolge umgeleiteten Erdstrompfad,
- Fig. 5: ein schematisch vereinfachtes Ersatzschaltbild zur Bestimmung der Lagerspannung gemäß der Ausführung nach Figur 3,
- Fig. 6: vergleichende Messkurven der Gleichtaktspannung und Lagerspannung (ohne und mit Anbindung des Stators),
- Fig. 7: eine alternative Ausführungsform einer erfindungsgemäßen Vorrichtung,
- Fig. 8: eine weitere alternative Ausführungsform einer erfindungsgemäßen Vorrichtung in einer zweiten Variante,
- Fig. 9: eine zweite alternative Ausführungsform einer erfindungsgemäßen Vorrichtung in der zweiten Variante,
- Fig. 10: eine dritte alternative Ausführungsform einer erfindungsgemäßen Vorrichtung in der zweiten Variante,
- Fig. 11: eine vierte alternative Ausführungsform einer erfindungsgemäßen Vorrichtung in der zweiten Variante,
- Fig. 12: eine weitere alternative Ausführungsform einer erfindungsgemäßen Vorrichtung in einer dritten Variante,
- Fig. 13: weitere alternative Ausführungsformen einer erfindungsgemäßen Vorrichtung in der dritten Variante.

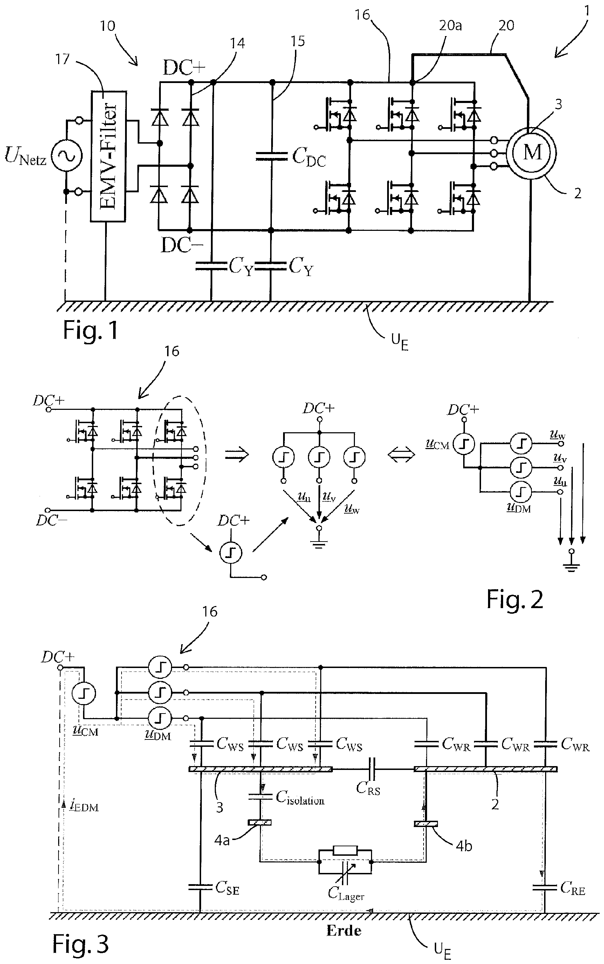

Die Erfindung wir nachfolgend anhand bevorzugter Ausführungsbeispiele mit Bezug auf die Figuren 1 bis 13 beschrieben, wobei gleiche Bezugszeichen auf gleiche funktionale und/oder strukturelle Merkmale hinweisen.

In der Figur 1 ist eine Darstellung eines Ausführungsbeispiels eines Gesamtsystems gezeigt, bei dem eine Vorrichtung 1 zur Reduzierung und/ oder zur Vermeidung von schädlichen Lagerströmen in dem dreiphasig gespeisten EC-Motor M dargestellt ist. Der Motor M ist mit einem Rotor 2 und mit einem isoliert aufgebauten Stator 3 ausgebildet, die vorliegend nur schematisch dargestellt sind.

Die Vorrichtung 1 umfasst (wie weiter in der Figur 1 ersichtlich) eine Anschlusselektronik 10 zum Anschluss des Motors M mit einem Gleichrichter 14, einem Zwischenkreis 15 und einem Wechselrichter 16 sowie eingangsseitig mit einem EMV-Filter 17. Wie ebenfalls in der Figur 1 zu erkennen ist, ist der Stator 3 über eine Verbindung 20 mit dem Potentialabgriff 20a am Wechselrichter 16 verbunden.

Zur Erläuterung der Funktionsweise der erfindungsgemäßen Vorrichtung wird im Folgenden mit der Figur 2 eine Modellierung des 3-Phasen-Wechselrichters 16, sowie des kapazitiven Netzwerks der parasitären Kapazitäten dargestellt.

Anschlussseitig liegt die Zwischenkreisspannung DC+, DC- des Zwischenkreises 15 (wie in der Figur 1 dargestellt) am Wechselrichter 16 an. Die an den Motorklemmen angelegten Spannungen sind mit uᵤ, uᵥ und u_{w} gekennzeichnet, während die Halbbrücken mit dem vereinfachten Halbbrückensymbol dargestellt sind.

Die vom Wechselrichter 16 an den Motorklemmen angelegte Spannung wird in einen Gleichtaktanteil (u_{CM}) und einen Gegentaktanteil (u_{DM}) zerlegt. Der Gleichtaktanteil setzt sich aus dem Mittelwert der von den Halbbrücken des Wechselrichters zur Verfügung gestellten Spannung zusammen. Die Gegentaktspannung jeweils aus der Differenz zwischen der Spannung am Schalter und der Gleichtaktspannung.

In der Figur 3 findet sich ein Ersatzschaltbild der parasitären Lagerkapazitäten mit dem Hauptstrompfad des Lagerstromes durch die Lager des Motors M. Der Rotor 2 ist gegenüber dem Stator 3 über einen Lageraussenring 4a (statorseitig) und einen Lagerinnenring 4b (rotorseitig) drehbar gelagert.

In einem vereinfachten anschaulichen Modell treten in dem System wenigstens die folgenden Kapazitäten auf, die in der Figur 3 näher bezeichnet sind. Aufgrund des geringen Abstandes der Wicklung vom Statorpaket tritt in dem System eine Wicklung-Stator-Kapazität C_{WS} auf. Durch die Wickelköpfe des Motors entsteht ferner jeweils auch eine Wicklung-Rotor-Kapazität C_{WR}.

Zwischen dem Rotor und dem Stator befindet sich die Rotor-Stator-Kapazität C_{RS}, die vergleichbar zu der Kapazität eines Zylinderkondensators ist. Zwischen dem Stator 3 und der Erde, sowie dem Rotor 2 und der Erde treten jeweils parasitäre Kapazitäten auf. Die kapazitive Kopplung des Eisenjochs mit dem Gehäusedeckel bzw. der Elektronik führt zu der parasitäre Stator-Erdkapazität C_{SE},
während die parasitäre Rotor-Erdkapazität C_{RE} typischerweise durch Anbauten am Rotor (beispielsweise Metallflügelräder) hervorgerufen wird. Die Lagerkapazität zwischen dem Lageraussenring 4a und dem Lagerinnenring 4b wird mit C_{Lager} bezeichnet.

Eine Veränderung des Sternpunktpotentials der C_{WS}/ C_{WR} - Sternschaltung kann nur durch eine Änderungen der Gleichtaktspannung erzeugt werden, welche vom Wechselrichter 16 bereitgestellt wird.

Der Gegentaktanteil der Spannung, der nur zwischen den Wicklungen anliegt, kann durch die symmetrische Sternschaltung der Kapazitäten von der Wicklung zum Rotor 2 und von der Wicklung zum Stator 3 (C_{WS} und C_{WR}) keine Veränderung des Sternpunktpotentials hervorrufen. Somit erfolgt keine Übertragung von Gegentaktspannungen in die restlichen Kapazitäten des Netzwerks.

Zur Ausbildung von Gleichtaktströmen über dem kapazitiven Netzwerk bedarf es des Weiteren eines geschlossenen Strompfades. Dieser wird durch die Anbindung des Wechselrichters 16 an das Erdpotential U_{E} der Erde über die Y-Kondensatoren, EMV-Filter oder die Netzinstallation erzeugt. Die sich ausbildenden Gleichtaktströme fließen somit vom Wechselrichter 16 über das kapazitive Netzwerk nach Erde und von dort über die Filterbauteile und das Netz wieder zurück zum Wechselrichter 16.

Den größten Anteil dabei bilden typischerweise die in Figur 3 mit i_{EDM} bezeichneten Ströme über den Stator 3, über den Lageraussen- bzw. Lagerinnenring 4a bzw. 4b zum Rotor 2 und dann zur Erde (dargestellt als gestrichelte Pfeillinie in Figur 3).

Aufgrund der unterschiedlichen Größe der Kapazitäten (C_{WS} deutlich größer als die Kapazität C_{WR}) fließen die Gleichtaktströme daher hauptsächlich über die Kapazitäten C_{WS} und bei einer solchen Schaltungstopologie damit über die Lagerringe 4a, 4b.

Je größer die zusätzlichen Anbauten am Rotor 2 sind, desto geringer ist das Rotorpotential gegenüber Erde und desto geringer werden die Lagerspannungen. Für die schädlichen Lagerspannungen sind jedoch nur Spannungsänderungen ΔU gegenüber dem Erdpotential U_{E} relevant.

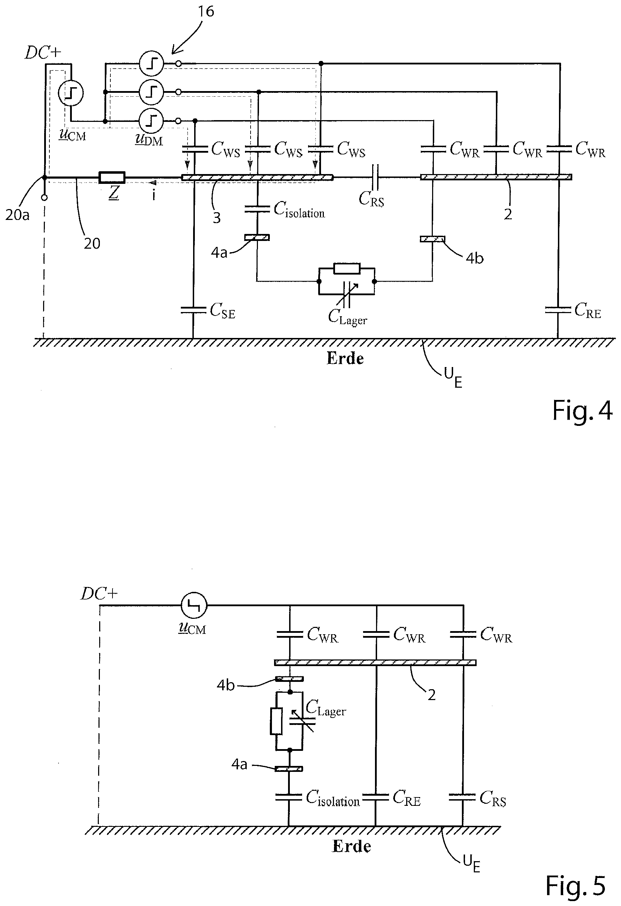

In der Figur 4 ist die Umsetzung der Erfindung anhand eines Ersatzschaltbildes der parasitären Lagerkapazitäten bei der Anbindung d. h. der Verbindung des Stators 3 über eine Impedanz Z am Potentialabgriff 20a des Wechselrichters 16 gezeigt. Hier liegt im Betrieb des Motors M das positive Zwischenkreispotential DC+ an. Hierdurch wird gewährleistet, dass das Potential des Stators 3 für hohe Frequenzen gegenüber dem Erdpotential U_{E} konstant gehalten wird und der Hauptanteil der Ströme i nicht über das Lager d. h. den Lageraussenring 4a bzw. Lagerinnenring 4b, sondern wieder direkt zum Zwischenkreispotential zurückfließen.

Sofern die Impedanz von Z für die hochfrequenten Lagerströme vernachlässigt werden kann und sich die Verbindung 20 zwischen dem Stator 3 und dem Potentialabgriff 20a wie ein Kurzschluss verhält, kann sich auch das Potential des Stators 3 maximal mit der Netzfrequenz und nicht mehr mit der Frequenz des Wechselrichters 16 ändern. Das auf diese Weise resultierende (vereinfachte) Ersatzschaltbild, lässt sich mit Figur 5 angeben.

Aufgrund der unterschiedlichen Größe der Kapazitäten (C_{WS} deutlich größer als die Kapazität C_{WR}) erhöht sich demzufolge die Impedanz der gesamten Strecke und die Lagerspannung wird abgesenkt. Die nun parallel zum Lager liegende parasitäre Kapazität C_{RE} reduziert die Lagerspannung weiter, wodurch mit dieser Vorrichtung eine signifikante Reduzierung der Lagerspannung erreicht werden kann.

Durch das Verbinden des Stators 3 mit dem positiven Zwischenkreispotential DC+ ist der Anteil der hochfrequenten Ströme, welche zu Erde abfließen, deutlich verringert. Dies hat den weiteren Vorteil, dass sich das Volumen des EMV-Filters bei der erfindungsgemäßen Lösung nicht erhöht.

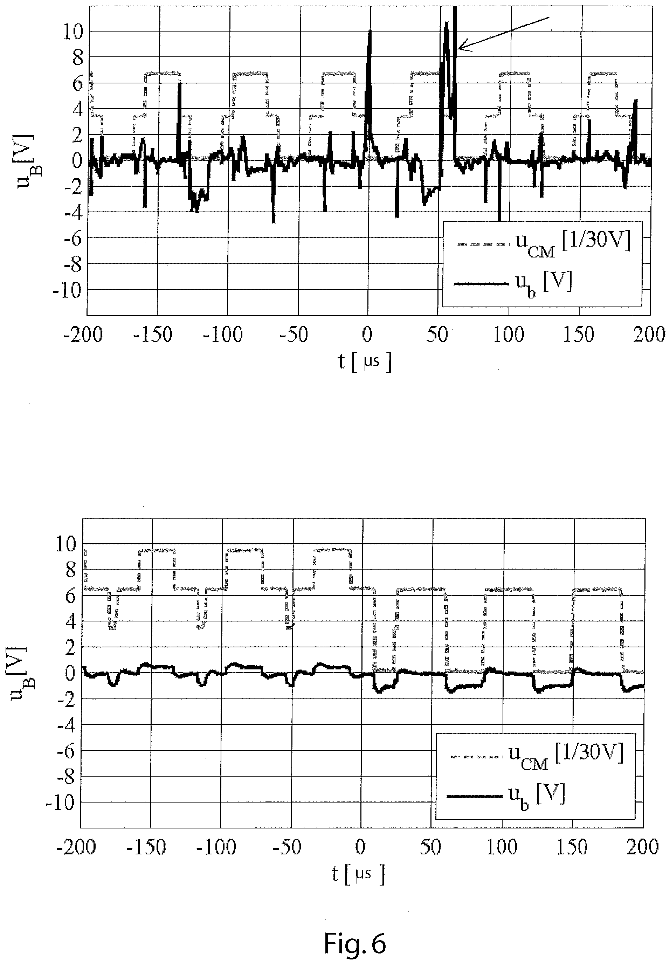

In der Figur 6 finden sich vergleichende Messkurven der Gleichtaktspannung und Lagerspannung. Die obere Abbildung zeigt den Fall ohne Anbindung des Stators 3 und die untere Abbildung die erfindungsgemäße Ausführung mit der Verbindung 20 zwischen Stator 3 und dem positiven Zwischenkreispotential DC+.

In der oberen Abbildung zeigt die gestrichelte Linie den gepulsten Gleichspannungstaktanteil U_{CM} und die durchgezogene Linie die Lagerspannung U_{b}. Insbesondere im Bereich bei 50us sind deutlich Spannungsdurchbrüche der Lagerspannung zu erkennen.

In der unteren Abbildung der Figur 6 ist ersichtlich, dass bei isoliert aufgebautem Stator 3, durch dessen Verbindung an das Elektronikpotential die Amplituden der am Lager anliegenden Lagerspannung u_{b} signifikant reduziert wurden und Durchschläge der Lagerspannung am Lager nicht auftreten.

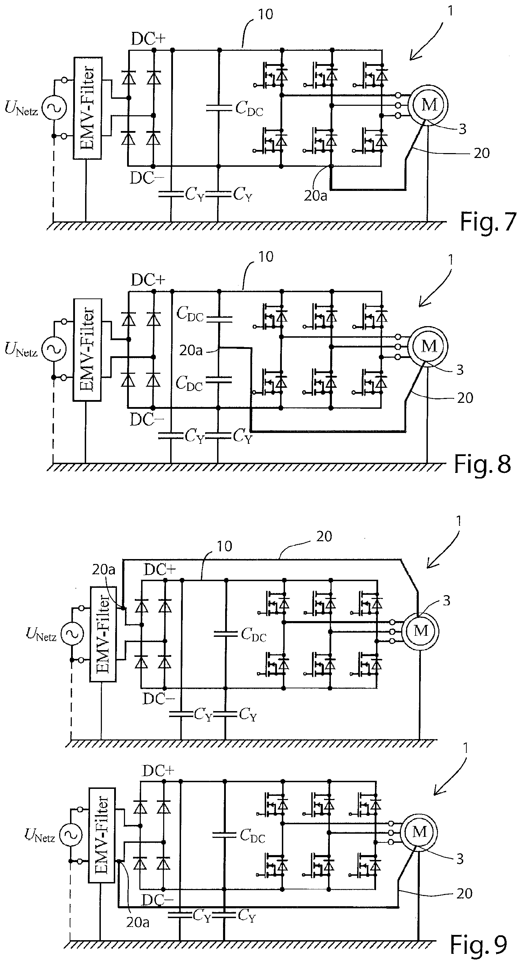

In den Abbildungen 7 bis 13 werden alternative Ausführungsformen der Erfindung gemäß zwei weiteren Hauptvarianten dargestellt. Die erste (zuvor dargestellte) Variante betraf die Verbindung des Stators 3 an einen Potentialabgriff 20a des Zwischenkreispotentials. In Figur 7 ist eine Lösung gezeigt, bei dem die Verbindung des Stators 3 nicht mit dem positiven, sondern dem negativen Zwischenkreispotential DC- realisiert wurde. Da für die Lagerspannung nur Gleichtaktvorgänge entscheidend sind, können sich bei Anschluss an DC- des Zwischenkreises 14 mögliche auftretende Lagerströme über den Zwischenkreiskondensator C_{DC} schließen.

Der Zwischenkreiskondensator C_{DC} weißt gegenüber den parasitären Kapazitäten des Motors deutlich höhere Kapazitäten auf und kann vereinfachend als Kurzschluss angenommen werden. Hierdurch ergibt sich eine direkte Verbindung zur Elektronikmasse und das Potential des Stators 3 kann für hohe Frequenzen gegenüber Erde konstant gehalten werden.
Eine zweite Variante betrifft einen beliebigen weiteren geeigneten Anschluss, der auf dem Potential des Zwischenkreises liegt, wie z. B. in der Figur 8 gezeigt ein Potentialabgriff 20a am Mittelabgriff des Zwischenkreises 15.

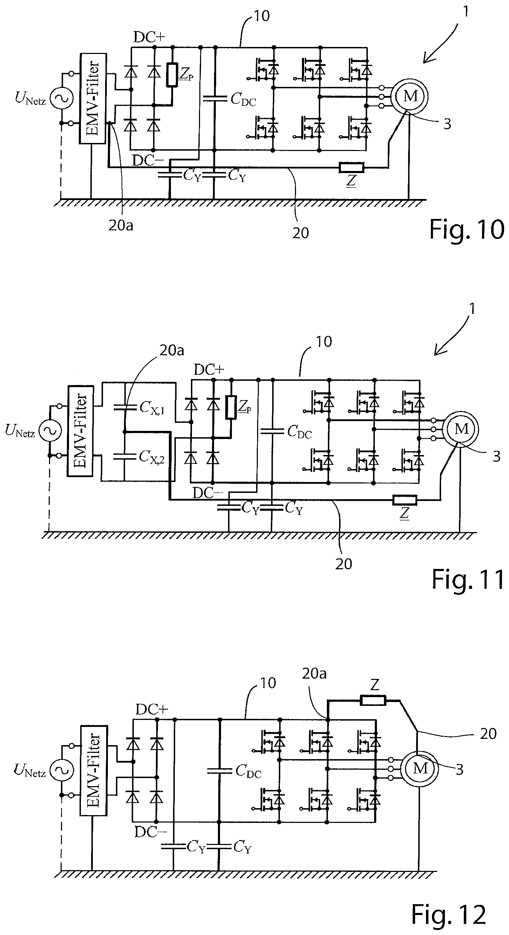

Eine dritte Variante betrifft einen geeigneten Anschluss, der auf einem von dem Zwischenkreispotential abweichenden Potential der Anschlusselektronik 10 liegt, wie z. B. in den beiden Abbildungen der Figur 9 gezeigt, bei dem der Potentialabgriff 20a vor dem Gleichrichter 14 erfolgt. Bei Verwendung beispielsweise eines Y-Kondensators kann damit auch ein Anschluss auf der AC-Seite des Gleichtrichters 14 erfolgen. Eine solche Konfiguration entspräche einer wechselnden Anbindung des Stators 3 an das Massepotential und das Zwischenkreispotential, je nach Vorzeichen der aktuell am Gleichrichter 14 anliegenden Netzspannung. Zu beachten ist hierbei jedoch, dass keine Gleichtaktdrosseln, oder stark Impedanz erhöhenden Filterelemente zwischen dem Zwischenkreis 15 und dem Potentialabgriff 20a liegen dürfen, um nicht dem technischen Effekt der vorliegenden Erfindung entgegen zu wirken. In diesem Zusammenhang ist weiter zu berücksichtigen, dass die Leitdauer des Gleichrichters 14 über ein möglichst langes Zeitintervall innerhalb der Netzhalbwelle gegeben sein muss. Dies kann beispielsweise durch eine aktive PFC-Schaltung erreicht werden. Im Falle eines passiven Gleichrichters 14 ist andererseits dafür zu sorgen, dass entweder der Gleichrichter 14 eine genügend große Dioden-Kapazität aufweist oder alternativ entsprechende Impedanzen parallel zum Gleichrichter geschaltet werden, die die Gleichrichterimpedanz für die hochfrequente Lagerspannung reduzieren. Eine entsprechende Ausführung ist in der Figur 10 dargestellt.

Ein weiterer Aspekt, der bei den diversen Ausführungsformen zu berücksichtigen ist, ist der Berührschutz des Motors M und damit der Schutz von Personen gegen elektrischen Schlag, da sich auf Grund der Verbindung 20 zwischen dem Stator 3 und dem Elektronikpotential, die Isolationsstrecke gegenüber herkömmlichen Ausführungen reduziert und zwar in erster Näherung auf die Isolationsstrecke zwischen dem Lagersitz und dem Rotor 2.

Eine Möglichkeit den erforderlichen Berührschutz herzustellen, besteht darin, die Anbindung des Stators 3 über Impedanzen mit ausreichender Schutzisolierung herzustellen. Hierzu können beispielsweise Y-Kondensatoren verwendet werden. Für die HF-Gleichtaktspannung des Wechselrichters 16 wirkt die Y-Kapazität trotzdem wie ein Kurzschluss und damit wie eine direkte Anbindung. Insbesondere dann, wenn die verwendete Kapazität im Frequenzbereich der Lagerspannung eine deutlich kleinere Impedanz aufweist als das kapazitive Netzwerk.

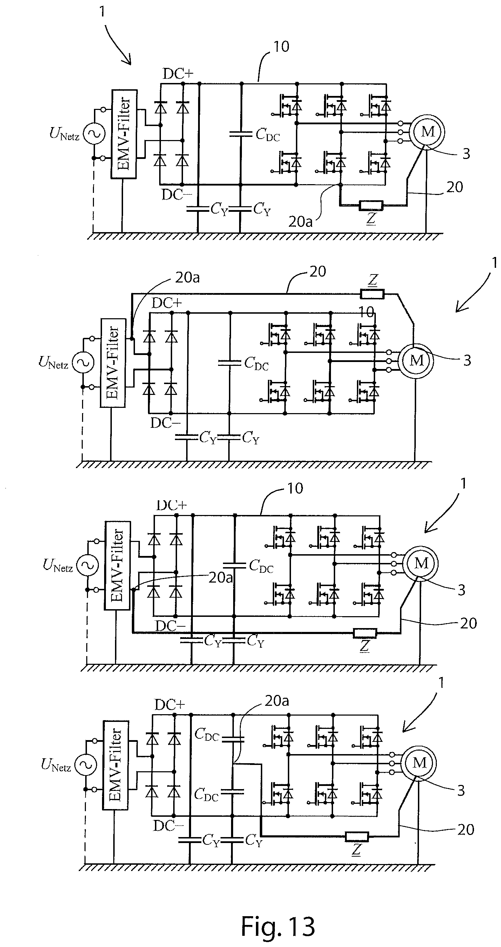

In der Figur 13 sind weitere Ausführungsformen dargestellt, die die Verbindung 20 des Stators 3 über eine Impedanz Z zeigen.

## Patentansprüche

1. Vorrichtung (1) zur Reduzierung und/ oder zur Vermeidung von schädlichen Lagerströmen in einer elektrischen Maschine (M), wie vorzugsweise einem dreiphasigen EC-Motor (M), mit einem Rotor (2) und mit einem isoliert aufgebauten Stator (3), wobei zwischen Rotor (2) und Stator (3) wenigstens ein Lageraussenring (4a) und ein Lagerinnenring (4b) vorgesehen ist, umfassend eine Anschlusselektronik (10) zum Anschluss des Motors (M), **dadurch gekennzeichnet, daß** der Stator (3) durch eine elektrische Verbindung (20) mit einem hochfrequenten gegenüber dem Erdpotential (U_{E}) verschiedenen und gegenüber diesem stabilen Elektronikpotential an einem Potentialabgriff (20a) der Anschlusselektronik (10) verbunden ist.

2. Vorrichtung (1) gemäß Anspruch 1, **dadurch gekennzeichnet, dass** die elektrische Verbindung (20) zwischen dem Stator (3) und dem Elektronikpotential über eine zwischengeschaltete Kapazität (21) oder über eine zwischengeschaltete Impedanz ausgebildet ist.

3. Vorrichtung (1) gemäß Anspruch 1, **dadurch gekennzeichnet, dass** die elektrische Verbindung (20) zwischen dem Stator (3) und dem Elektronikpotential (U_{E}) als elektrische Kurzschlussverbindung ausgebildet ist.

4. Vorrichtung (1) gemäß einem der Ansprüche 1 bis 3, **dadurch gekennzeichnet, dass** die Anschlusselektronik (10) einen Gleichrichter (14), einen Zwischenkreis (15) und einen Wechselrichter (16) umfasst und der Potentialabgriff (20a) in der Anschlusselektronik (10) so vorgesehen ist, dass das am Stator (3) verbundene Elektronikpotential einem Potential des Zwischenkreises (15), vorzugsweise dem positive Zwischenkreispotential (DC+), einem Massepotential des Zwischenkreises (15), einem Potential am Mittelabgriff (15') des Zwischenkreises (15) oder dem negativen Zwischenkreispotential (DC-) entspricht.

5. Vorrichtung (1) gemäß einem der Ansprüche 1 bis 3, **dadurch gekennzeichnet, dass** der Potentialabgriff (20a) für den Stator (3) ein Abgriff unmittelbar vor oder unmittelbar nach dem Gleichrichter (14) ist.

6. Vorrichtung (1) gemäß einem der Ansprüche 1 bis 5, **dadurch gekennzeichnet, dass** die Anschlusselektronik (10) eingangsseitig ferner einen EMV-Filter (17) aufweist und der Potentialabgriff (20a) für den Stator (3) ein Abgriff innerhalb des EMV-Filters (17) ist.

7. Vorrichtung (1) gemäß einem der Ansprüche 1 bis 5, **dadurch gekennzeichnet, dass** die Anschlusselektronik (10) an einer Niederspannungsversorgung oder einem Schaltnetzteil angeschlossen ist und der Potentialabgriff (20a) für den Stator (3) als ein Abgriff an den Ausgängen der Niederspannungsversorgung oder des Schaltnetzteils vorgesehen ist.

8. Vorrichtung (1) gemäß einem der Ansprüche 4 bis 7, **dadurch gekennzeichnet, dass** der Gleichrichter (14) ein aktiver oder passiver Gleichrichter ist.

9. Vorrichtung (1) gemäß einem der Ansprüche 5 bis 8, **dadurch gekennzeichnet, dass** ein im Frequenzbereich der Lagerspannung Impedanz reduzierendes Netzwerk parallel zu wenigstens einer der Dioden (14a) des Gleichrichters (14) geschaltet wird.

10. Elektromotor (M) vorzugsweise EC-Motor ausgebildet mit einer Vorrichtung (1) gemäß einem der vorhergehenden Ansprüche 1 bis 9.

## Claims

1. Apparatus (1) for reducing and/or avoiding harmful bearing currents in an electrical machine (M) such as preferably a three-phase EC motor (M), having a rotor (2) and a stator (3) which is constructed in an insulated manner, wherein at least one outer bearing ring (4a) and one inner bearing ring (4b) are provided between rotor (2) and stator (3), comprising a connecting electronics (10) for connecting the motor (M), **characterized in that** the stator (3) is connected by means of an electrical connection (20) to a high-frequency electronics potential which differs from and is stable with respect to the earth potential (U_{E}) at a potential tap (20a) of the connecting electronics (10).

2. Apparatus (1) according to claim 1, **characterized in that** the electrical connection (20) between the stator (3) and the electronics potential is formed by an intermediate capacitance (21) or via an intermediate impedance.

3. Apparatus (1) according to claim 1, **characterized in that** the electrical connection (20) between the stator (3) and the electronics potential (U_{E}) is formed as an electrical short circuit connection.

4. Apparatus (1) according to one of the claims 1 to 3, **characterized in that** the connecting electronics (10) comprises a rectifier (14), an intermediate circuit (15) and an inverter (16), and the potential tap (20a) in the connecting electronics (10) is provided so that the electronics potential connected to the stator (3) corresponds to a potential of the intermediate circuit (15), preferably to the positive intermediate circuit potential (DC+), to a ground potential of the intermediate circuit (15), to a potential at the center tap (15') of the intermediate circuit (15) or to the negative intermediate circuit potential (DC-).

5. Apparatus (1) according to one of the claims 1 to 3, **characterized in that** the potential tap (20a) for the stator (3) is a tap immediately before or immediately after the rectifier (14).

6. Apparatus (1) according to one of the claims 1 to 5, **characterized in that** the connecting electronics (10) moreover comprises an EMC filter (17) on the input side, and the potential tap (20a) for the stator (3) is a tap within the EMC filter (17).

7. Apparatus (1) according to one of the claims 1 to 5, **characterized in that** the connecting electronics (10) is connected to a low-voltage power supply or switching power supply, and the potential tap (20a) for the stator (3) is provided as a tap at the outputs of the low-voltage power supply or of the switching power supply.

8. Apparatus (1) according to one of the claims 4 to 7, **characterized in that** the rectifier (14) is an active or passive rectifier.

9. Apparatus (1) according to one of the claims 5 to 8, **characterized in that** a network which reduces impedance in the frequency range of the bearing voltage is connected in parallel to at least one of the diodes (14a) of the rectifier (14).

10. Electric motor (M), preferably an EC motor, formed with an apparatus (1) according to one of the preceding claims 1 to 9.

## Revendications

1. Dispositif (1) pour réduire et/ou pour éviter des courants de palier dommageables dans une machine électrique (M), comme de préférence un moteur EC triphasé (M), avec un rotor (2) et avec un stator (3) isolé, dans lequel au moins une bague extérieure de palier (4a) et une bague intérieure de palier (4b) est prévue entre le rotor (2) et le stator (3), comprenant une électronique de raccordement (10) pour le raccordement du moteur (M), **caractérisé en ce que** le stator (3) est relié par une liaison électrique (20) à un potentiel électronique haute fréquence différent par rapport au potentiel de terre (U_{E}) et stable par rapport à celui-ci au niveau d'une prise de potentiel (20a) de l'électronique de raccordement (10).

2. Dispositif (1) selon la revendication 1, **caractérisé en ce que** la liaison électrique (20) est réalisée entre le stator (3) et le potentiel électronique par le biais d'une capacité intermédiaire (21) ou par le biais d'une impédance intermédiaire.

3. Dispositif (1) selon la revendication 1, **caractérisé en ce que** la liaison électrique (20) est réalisée entre le stator (3) et le potentiel électronique (U_{E}) en tant que liaison de court-circuit électrique.

4. Dispositif (1) selon l'une quelconque des revendications 1 à 3, **caractérisé en ce que** l'électronique de raccordement (10) comprend un redresseur (14), un circuit intermédiaire (15) et un onduleur (16) et la prise de potentiel (20a) est prévue dans l'électronique de raccordement (10) de sorte que le potentiel électronique relié au stator (3) correspond à un potentiel du circuit intermédiaire (15), de préférence au potentiel de circuit intermédiaire positif (DC+), à un potentiel de masse du circuit intermédiaire (15), à un potentiel au niveau de la poignée médiane (15') du circuit intermédiaire (15) ou au potentiel de circuit intermédiaire négatif (DC-).

5. Dispositif (1) selon l'une quelconque des revendications 1 à 3, **caractérisé en ce que** la prise de potentiel (20a) pour le stator (3) est une prise directement avant ou directement après le redresseur (14).

6. Dispositif (1) selon l'une quelconque des revendications 1 à 5, **caractérisé en ce que** l'électronique de raccordement (10) présente côté entrée en outre un filtre CEM (17) et la prise de potentiel (20a) pour le stator (3) est une prise à l'intérieur du filtre CEM (17).

7. Dispositif (1) selon l'une quelconque des revendications 1 à 5, **caractérisé en ce que** l'électronique de raccordement (10) est raccordée à une alimentation basse tension ou à une alimentation à découpage et la prise de potentiel (20a) pour le stator (3) est prévue en tant que prise au niveau des sorties de l'alimentation basse tension ou de l'alimentation à découpage.

8. Dispositif (1) selon l'une quelconque des revendications 4 à 7, **caractérisé en ce que** le redresseur (14) est un redresseur actif ou passif.

9. Dispositif (1) selon l'une quelconque des revendications 5 à 8, **caractérisé en ce qu'**un réseau réduisant l'impédance dans la plage de fréquence de la tension de palier est monté parallèlement à au moins une des diodes (14a) du redresseur (14).

10. Moteur électrique (M) de préférence moteur EC réalisé avec un dispositif (1) selon l'une quelconque des revendications précédentes 1 à 9.
